# EUROPEAN PATENT APPLICATION

(11) **EP 3 073 738 A1**
(43) Date of publication of application: **28.09.2016**
(21) Application number: 15305438.2
(22) Date of filing: 26.03.2015
(51) Int. Cl.: H04N 19/196, H04N 19/102, H04N 19/136, H04N 19/177, H04N 19/17, H04N 19/179, H04N 19/85, G06F 17/30

(54) **METHODS AND DEVICES FOR VIDEO ENCODING**

(71) Applicant: ALCATEL LUCENT, 92100 Boulogne-Billancourt (FR)
(72) Inventor: Lievens, Sammy, 2018 Antwerpen (BE); Tytgat, Donny, 2018 Antwerp (BE)
(74) Representative: ALU Antw Patent Attorneys

(57) **Abstract**

Embodiments relate to a method for generating correlation data (CD) useful for encoding a source video (Vs) with a video encoding module capable of encoding a video in function of encoding parameters, executed by a correlation data generating device (1), and comprising:
- for each training video (Vt) in plurality of training videos: - determining video segments (S) of the training video, - determining video properties (P) of the respective video segments (S) by analyzing the content of the video segments (S), - determining a video descriptor (D) in function and the video properties (P), and - determining optimal encoding parameters (E) for encoding the training video (Vt) with the video encoding module,
- determining correlation data (CD) representative of a correlation between the video descriptors (D) and the optimal encoding parameters (E) associated with respective training videos (Vt), and
- storing said correlation data (CD).

## Description

### FIELD OF THE INVENTION

The present invention relates to the field of telecommunications. In particular, the present invention relates to methods and devices for video encoding.

### BACKGROUND

Video encoding is a processing-power intensive task. Optimal encoding parameter settings are necessary to achieve an optimal compression ratio at a high video quality level. Most video encoding standards offer multiple encoding profiles, each with a multitude of possible parameter settings and parameter value ranges (that can be changed on a frame-by-frame level), which for the same video content would result in different compression ratio's and/or video quality. Achieving the optimal parameter settings is thus of prime interest, but results in a time-consuming and processing-power intensive process.

Most of the time, in order to reduce processing time and power, encoders only provide a limited set of encoder profiles and/or only a limited set of available parameter settings to change during the video encoding process and/or limited parameter value ranges. In certain more restrictive scenario's, encoders don't allow to update parameter settings during the video encoding process itself.

Because achieving the optimal parameter settings mostly comes down to a brute-force approach of testing multiple parameter settings and values, it is a time-consuming and processing-power intensive process, if one provides too many degrees-of-freedom. In the case of real-time video encoding, one simply does not have the possibility to (brute-force) test all multiple parameter settings and values, limiting the degrees-of-freedom and resulting in a non-optimal parameter setting, which in turn will lead to poor compression ratios and poor video quality.

The document US6810086 describes a video encoder comprising a plurality of video segment encoders associated with respective models or characteristics of predetermined scene types. A mapper determines a model associated with a video segment. The video segment is then encoded by one of the video segment encoders, selected in function of the determined model. This requires, at the decoder, a plurality of video segment decoders for the respective video segment encoders.

### SUMMARY

It is thus an object of embodiments of the present invention to propose methods and devices for video encoding, which do not show the inherent shortcomings of the prior art.

Accordingly, embodiments relate to a method for generating correlation data useful for encoding a source video with a video encoding module capable of encoding a video in function of encoding parameters, executed by a correlation data generating device, and comprising:
- for each training video in plurality of training videos:
   - determining video segments of the training video,
   - determining video properties of the respective video segments by analyzing the content of the video segments,
   - determining a video descriptor in function and the video properties, and
   - determining optimal encoding parameters for encoding the training video with the video encoding module,
- determining correlation data representative of a correlation between the video descriptors and the optimal encoding parameters associated with respective training videos, and
- storing said correlation data.

Correlatively, embodiments relates to a correlation data generating device for generating correlation data useful for encoding a source video with a video encoding module capable of encoding a video in function of encoding parameters, comprising:
- a segmentation module for determining video segments for each training video in plurality of training videos,
- an analysis module for determining video properties of the respective video segments by analyzing the content of the video segments,
- a description module for determining a video descriptor in function and the video properties for each training video in plurality of training videos,
- a video encoding module for determining respective optimal encoding parameters for encoding each training video in plurality of training videos with the video encoding module,
- a correlation data determining module for determining correlation data representative of a correlation between the video descriptors and the optimal encoding parameters associated with respective training videos, and
- a data storage for storing said correlation data.

Determining optimal encoding parameters may comprise encoding the training video respectively in function of a plurality of sets of encoding parameters, and selecting one of the sets of encoding parameters in function of compression ratios and/or quality levels of the respective encoded training videos.

In some embodiments, one of the sets of encoding parameters is determined in function of previously generated correlation data and of the video descriptor.

In some embodiments, the correlation data comprise a machine learned model determined by a multi-label classification training module. In other embodiments, the correlation data comprise a plurality of pairs of video descriptors and optimal encoding parameters.

Analyzing the content of a video segment may comprise at least one of object detection, object recognition, action recognition, optical flow extraction and object tracking, and said video properties may include at least one of a type of scene, a type of content, a type and location of an object and/or of an action, and a dominant movement.

The video properties may be determined in function of metadata associated with the video segment.

Updated correlation data may be determined in function of a video descriptor and of encoding parameters associated with at least one additional training video.

Other embodiments relate to a method for encoding a source video with a video encoding module capable of encoding a video in function of encoding parameters, executed by a video encoding device, comprising:
- determining video segments of the source video,
- determining video properties of the respective video segments by analyzing the content of the video segments,
- determining a video descriptor in function of the video properties,
- determining encoding parameters for the source video in function the video descriptor and of correlation data, and
- encoding said source video with the video encoding module, using the determined encoding parameters.

In some embodiments, the correlation data comprise a machine learned model determined by a multi-label classification training module, and determining encoding parameters comprises inputting the video descriptor to a multi-label classification module. In other embodiments, the correlation data comprise a plurality of pairs of video descriptors and optimal encoding parameters, and determining encoding parameters comprises determining a closest match between the determined video descriptor and the video descriptors of the correlation data.

Embodiments also relates to a video encoding device for encoding a source video with a video encoding module capable of encoding a video in function of encoding parameters, comprising:
- a segmentation module for determining video segments of the source video,
- an analysis module for determining video properties of the respective video segments by analyzing the content of the video segments,
- a description module for determining a video descriptor in function of the video properties,
- a encoding parameters determining module for determining encoding parameters for the source video in function the video descriptor and of correlation data, and
- a video encoding module for encoding said source video with the video encoding module, using the determined encoding parameters.

Embodiments also relate to a computer program comprising instructions for performing one of the methods mentioned before when said instructions are executed by a computer.

### BRIEF DESCRIPTION OF THE DRAWINGS

The above and other objects and features of the invention will become more apparent and the invention itself will be best understood by referring to the following description of embodiments taken in conjunction with the accompanying drawings wherein:
Figure 1 is block diagram of a correlation data generating device,
Figure 2 is block diagram of a correlation video encoding device, and
Figure 3 is a structural view of a video processing apparatus.

### DESCRIPTION OF EMBODIMENTS

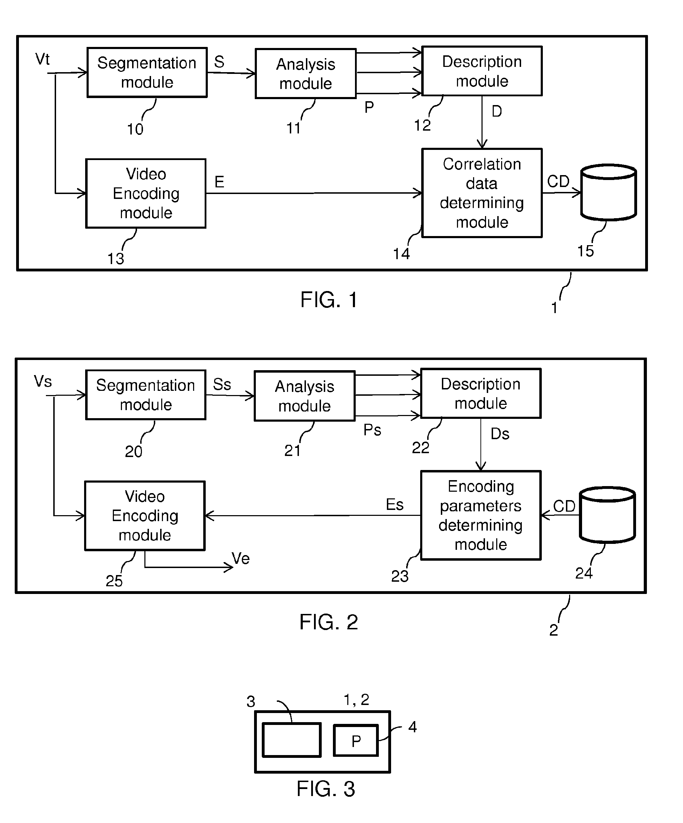

**Figure 1** is a block diagram of a correlation data generating device 1 for generating correlation data CD useful for encoding a video, in function of training videos Vt. The correlation data generating device 1 comprises a segmentation module 10, an analysis module 11, a description module 12, a video encoding module 13, a correlation data determining module 14 and a data storage 15.

The segmentation module 10 determines video segments S associated with a training video Vt, by spatial and/or temporal segmentation of the training video Vt. For example, the segmentation module 10 splits the training video Vt into individual scenes, individual frame and/or individual frame regions. Accordingly, a segment S may include for example a plurality of frames, a single frame, a portion of a frame...

The analysis module 11 analyses the content of the respective video segments S and determines video properties P associated with the respective video segments S. The analysis performed by the analysis module 11 comprises computer vision algorithms, for example object detection, object recognition, action recognition, optical flow extraction, object tracking... Accordingly, the properties P determined by the analysis module 11 include for example a type of scene, a type of content, a type and/or location of an object or of an action, a dominant movement...

The analysis module 11 may also determine properties P in function of metadata associated with a video segment S. The metadata may include for example information about the types of scenes, actors, GPS coordinates, capturing location... This information can be obtained for example by manual intervention, Internet look-up or sensor analysis (e.g. gyro's in the camera detecting high camera movement, typical for action scenes).

The description module 12 determines a video descriptor D of the training video Vt, in function of the properties P of the video segments S. In a simple example, the video descriptor D is a vector including all the properties P of all the video segments S of the training video Vt. In other example, the description module 12 analyses the properties P and determines the most dominant properties of the training video Vt. Accordingly, the segment descriptor D may include a subset of all the properties P of all the video segments S of the training video V and/or characteristics determines in function thereof. The video descriptor D may have another data structure than a vector, such as a tree-structured vector.

The video encoding module 13 determines optimal encoding parameters E for the training video Vt. Here, "optimal encoding parameters" means encoding parameters which satisfy an optimization criteria in an optimization process. For example, the video encoding module 13 performs a brute-force optimization by encoding the training video Vt with a plurality of sets of encoding parameters and selecting one set of encoding parameters which satisfy a criteria. The criteria may be for example the best compression for a given quality level or the best quality for a given compression level.

The encoding parameters may include various types of parameters, such as:
- encoding parameters that can take on a limited number of possible values (e.g. PCM mode on/off, in-loop filtering across tile boundaries on/off, decoding refresh type (IDR, CRA, none))
- encoding parameters that can take on a broader range of possible values (e.g. maximum coding unit width, motion vector search range, quantization)

Other examples of encoding parameters include Group of Picture size, Intra-prediction mode, macroblock partition...

The correlation data determining module 14 determines correlation data CD representative of a correlation between the video descriptors D and the optimal encoding parameters E associated with respective training videos Vt.

In one embodiment, the correlation data CD comprise a model describing a statistical correlation between video descriptors D and corresponding optimal encoding parameters E. The model may be determined by machine learning technique, for example with a multi-label classification training module. The model may be determined based on a plurality of training videos Vt and the corresponding video descriptors D and optimal encoding parameters E. The model may be later updated in function of the video descriptors D and the optimal encoding parameters E of one or more additional training videos Vt.

In another embodiment, the correlation data CD comprise the pairs (video descriptors D, optimal encoding parameters E) for a plurality of training videos Vt. The correlation data CD may be updated by adding more pairs (D, E) associated with one or more additional training videos Vt.

The data storage 15 stores the correlation data CD, whether a model or a set of pairs (D, E).

**Figure 2** is a block diagram of a video encoding device 2 for encoding a source video Vs. The video encoding device 2 comprises a segmentation module 20, an analysis module 21, a description module 22, an encoding parameters determining module 23, a data storage 24 and a video encoding module 25.

The segmentation module 20, the analysis module 21 and the description module 22 determine respectively segments Ss, properties Ps and a video descriptor Ds associated with the source video Vs, in a similar manner to the segmentation module 10, the analysis module 11 and the description module 12 of the correlation data generating device 1.

The data store 24 stores correlation data CD representative of a correlation between video descriptors D and optimal encoding parameters E associated with respective training videos Vt. The correlation data CD have been generated by the correlation data generating device 1. As explained above, the correlation data CD may include a model or pairs (D, E).

At this point, it should be noted that the correlation data generating device 1 and the video encoding device 2 may be parts of the same video processing apparatus. The data storage 15 and 24 may be the same data storage. In other embodiments, the correlation data generating device 1 and the video encoding device 2 are two different apparatuses and the correlation data CD is transferred from one to the other.

The encoding parameters determining module 23 determines encoding parameters Es for the source video Vs, in function of the video descriptor Ds determined for the source video Vs and the correlation data CD. In the case of correlation data CD comprising a model, the encoding parameters determining module 23 inputs the video descriptor Ds to the multi-label classification task to extract the encoding parameters Es. In the case of correlation data CD comprising pairs (D, E), the encoding parameters determining module 23 determines the video descriptor D included in the correlation data CD which is the closest match to the video descriptor Ds, for example by searching for the smallest Euclidian distance between vectors, and selects the corresponding encoding parameters E as encoding parameters Es for the source video Vs.

Finally, the video encoding module 25 encode the source video Vs in function of the encoding parameters Es. The video encoding module 25 may comply with any video encoding standards such as H.264, HEVC... The encoded video is denoted Ve.

The correlation data CD may be determined by the correlation data determining device 1 when and/or where sufficient processing resources are available and/or when processing time is not a constrain. Accordingly, the video encoding module 13 may determine the optimal encoding parameters E by performing for example brute-force optimization and/or by making use of all available degrees-of-freedom (all available encoding profiles, all available parameters settings with a full value range). Therefore, the optimal encoding parameters E determined for a training video Vt provide a high compression ratio and a high quality level.

In contrast, the video encoding device 2 does not need to perform a complex optimization task for determining the encoding parameters Es. Indeed, in function of the video descriptor Ds and of the correlation data CD, the encoding parameters determining module 23 may determine encoding parameters Es for the source video Vs which also provide a high compression ration and high quality level. Thus, the source video Vs may be encoded when time is a constrain, for example in a real-time encoding application, and/or when limited processing resources are available.

As explained before, in some embodiments, the video encoding module 13 performs a brute-force optimization by encoding training videos Vt with a plurality of sets of encoding parameters. One of the encodings of an additional training video Vt may be performed as explained with reference to Figure 2, based on previously determined correlation data CD. Then, the correlation data CD may be updated in function of the optimal encoding parameters for the additional training video Vt.

The functioning of the functional modules described with references to Figures 1 and 2 may correspond to steps of a method executed by the correlation data generating device 1 or the video encoding device 2, respectively.

**Figure 3** is a structural view of a video processing device, which may be the correlation data generating device 1 and/or the video encoding device 2. The video processing device comprises a processor 3 and a memory 4. The memory 4 stores a computer program P which, when executed by the processor 3, cause the video processing device to execute one of the methods described above with reference to Figures 1 and 2.

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared, for example in a cloud computing architecture. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represents various processes which may be substantially represented in computer readable medium and so executed by a computer or processor, whether or not such computer or processor is explicitly shown.

Embodiments of the method can be performed by means of dedicated hardware and/of software or any combination of both.

While the principles of the invention have been described above in connection with specific embodiments, it is to be clearly understood that this description is made only by way of example and not as a limitation on the scope of the invention, as defined in the appended claims.

## Claims

1. Method for generating correlation data (CD) useful for encoding a source video (Vs) with a video encoding module capable of encoding a video in function of encoding parameters, executed by a correlation data generating device (1), and comprising:
- for each training video (Vt) in plurality of training videos:
- determining video segments (S) of the training video,
- determining video properties (P) of the respective video segments (S) by analyzing the content of the video segments (S),
- determining a video descriptor (D) in function and the video properties (P), and
- determining optimal encoding parameters (E) for encoding the training video (Vt) with the video encoding module,
- determining correlation data (CD) representative of a correlation between the video descriptors (D) and the optimal encoding parameters (E) associated with respective training videos (Vt), and
- storing said correlation data (CD).

2. Method according to claim 1, wherein determining optimal encoding parameters (E) comprises encoding the training video respectively in function of a plurality of sets of encoding parameters, and selecting one of the sets of encoding parameters in function of compression ratios and/or quality levels of the respective encoded training videos.

3. Method according to claim 2, wherein one of the sets of encoding parameters is determined in function of previously generated correlation data and of the video descriptor (D).

4. Method according to one of claims 1 to 3, wherein said correlation data (CD) comprise a machine learned model determined by a multi-label classification training module.

5. Method according to one of claims 1 to 3, wherein said correlation data (CD) comprise a plurality of pairs of video descriptors (D) and optimal encoding parameters (E).

6. Method according to one of claims 1 to 5, wherein analyzing the content of a video segment (S) comprises at least one of object detection, object recognition, action recognition, optical flow extraction and object tracking, and said video properties (P) include at least one of a type of scene, a type of content, a type and location of an object and/or of an action, and a dominant movement.

7. Method according to one of claims 1 to 6, comprising determining said video properties (P) in function of metadata associated with said video segment (S).

8. Method according to one of claims 1 to 7, comprising determining updated correlation data (CD) in function of a video descriptor (D) and of encoding parameters associated with at least one additional training video (Vt).

9. Computer program (P) comprising instructions for performing the method of one of claims 1 to 8 when said instructions are executed by a computer.

10. Correlation data generating device (1) for generating correlation data (CD) useful for encoding a source video (Vs) with a video encoding module capable of encoding a video in function of encoding parameters, comprising:
- a segmentation module (10) for determining video segments (S) for each training video (Vt) in a plurality of training videos,
- an analysis module (11) for determining video properties (P) of the respective video segments by analyzing the content of the video segments,
- a description module (12) for determining a video descriptor (D) in function of the video properties for each training video in the plurality of training videos,
- a video encoding module (13) for determining respective optimal encoding parameters (E) for encoding each training video in plurality of training videos with the video encoding module,
- a correlation data determining module (14) for determining correlation data (CD) representative of a correlation between the video descriptors and the optimal encoding parameters associated with respective training videos, and
- a data storage (15) for storing said correlation data.

11. Method for encoding a source video (Vs) with a video encoding module (25) capable of encoding a video in function of encoding parameters, executed by a video encoding device (2), comprising:
- determining video segments (Ss) of the source video (Vs),
- determining video properties (Ps) of the respective video segments (Ss) by analyzing the content of the video segments (Ss),
- determining a video descriptor (Ds) in function of the video properties (Ps),
- determining encoding parameters (Es) for the source video (Vs) in function the video descriptor (Ds) and of correlation data (CD) determined according to the method of one of claims 1 to 8, and
- encoding said source video (Vs) with the video encoding module (25), using the determined encoding parameters (Es).

12. Method according to claim 11, wherein said correlation data (CD) comprise a machine learned model determined by a multi-label classification training module, and wherein determining encoding parameters (Es) comprises inputting the video descriptor (Ds) to a multi-label classification module.

13. Method according to claim 11, said correlation data (CD) comprise a plurality of pairs of video descriptors (D) and optimal encoding parameters (E), and determining encoding parameters (Es) comprises determining a closest match between the determined video descriptor (Ds) and the video descriptors (D) of the correlation data (CD).

14. Computer program (P) comprising instructions for performing the method of one of claims 11 to 13 when said instructions are executed by a computer.

15. Video encoding device (2) for encoding a source video (Vs) with a video encoding module capable (25) of encoding a video in function of encoding parameters, comprising:
- a segmentation module (20) for determining video segments (Ss) of the source video,
- an analysis module (21) for determining video properties (Ps) of the respective video segments by analyzing the content of the video segments,
- a description module (22) for determining a video descriptor (Ds) in function of the video properties,
- a encoding parameters determining module (23) for determining encoding parameters (Es) for the source video in function the video descriptor and of correlation data determined according to the method of one of claims 1 to 8, and
- a video encoding module (25) for encoding said source video with the video encoding module, using the determined encoding parameters (Es).
